# DEMANDE DE BREVET EUROPEEN

(11) **EP 4 782 714 A1**
(43) Date de publication de la demande: **29.07.2026**
(21) Numéro de dépôt: 26151672.8
(22) Date de dépôt: 13.01.2026
(51) Int. Cl.: F16D 51/22, F16D 55/224, F16D 65/18, F16D 65/22, F16D 65/56, F16D 121/24, F16D 125/36

(54) **MÉCANISME ET DISPOSITIF D'ACTIONNEUR À DEUX POUSSOIRS ET DISPOSITIF DE FREIN ASSOCIÉ**

(30) Priorité: 26.01.2025 FR 2500805
(71) Demandeur: NTN Europe, 74000 Annecy (FR)
(72) Inventeur: GEORGES, Etienne, 74000 ANNECY (FR)
(74) Mandataire: Alatis

(57) **Abrégé**

Un mécanisme d'actionneur (22) de dispositif de frein (10) comporte un carter d'actionneur (30) et une roue d'entraînement (36) tournant autour d'un axe de référence (200) perpendiculaire à un plan médian (300). De chaque côté du plan médian (300) sont disposés un poussoir (24) et une platine intermédiaire (52), liée au poussoir (24) par une interface filetée (64) et à la roue d'entraînement (36) par une interface à rampes à billes (56). L'interface filetée (64) a un sens d'hélice assurant un écartement du poussoir (24) lorsque la platine intermédiaire (52) tourne par rapport au poussoir (24) dans un sens de rotation d'écartement. L'interface à rampes à billes (56) a un sens de rampes à billes assurant un écartement de la platine intermédiaire (52) lorsque la roue d'entraînement (36) tourne par rapport à la platine intermédiaire (52) dans le sens de rotation d'écartement.

## Description

### DOMAINE TECHNIQUE DE L'INVENTION

L'invention se rapporte à un mécanisme d'actionneur à deux poussoirs agissant dans deux directions opposées, et notamment à un tel mécanisme destiné à la commande d'un dispositif de frein. Elle se rapporte également à un dispositif de frein intégrant un tel mécanisme d'actionneur.

### ÉTAT DE LA TECHNIQUE ANTÉRIEURE

Dans le document WO2020/064786 A1 est divulgué un mécanisme d'actionneur à deux poussoirs, destiné à commander un dispositif de frein à tambour. Le mécanisme d'actionneur comporte, logée dans un carter d'actionneur, une roue dentée d'entraînement, guidée en rotation par rapport au carter d'actionneur de manière à tourner sans translation autour d'un axe de référence du carter d'actionneur, parallèle à deux directions de poussée opposées du mécanisme d'actionneur et perpendiculaire à un plan médian du mécanisme. Le mécanisme d'actionneur comporte en outre deux poussoirs disposés axialement de part et d'autre du plan médian, chacun étant associé à une des deux directions de poussée et guidé en translation bidirectionnelle sans rotation le long de l'axe de référence par rapport au carter d'actionneur. Deux platines intermédiaires sont montées solidaires en rotation de la roue d'entraînement, et mobile en translation le long de l'axe de référence par rapport à la roue d'entraînement. Chacune des platines est liée à l'un des poussoirs par une interface à rampes à billes. Un mécanisme à rattrapage de jeu est disposé dans un logement entre les platines intermédiaire, et permet d'écarter les deux platines l'une de l'autre, pour augmenter la course de translation des poussoirs. Les rampes à billes sont situées entre les poussoirs et les platines, et peuvent se trouver exposées aux polluants s'infiltrant entre les poussoirs et le carter d'actionneur, notamment lors des mouvements en va-et-vient des poussoirs. Il s'ensuit un risque de détérioration rapide des rampes et des billes, limitant la durée de vie du mécanisme.

### EXPOSÉ DE L'INVENTION

L'invention vise à remédier aux inconvénients de l'état de la technique et à proposer un mécanisme d'actionneur à deux poussoirs et à rampes à billes, dans lequel les interfaces à rampes à billes sont peu exposées aux polluants.

Pour ce faire est proposé, selon un premier aspect de l'invention, un mécanisme d'actionneur comportant un carter d'actionneur et une roue d'entraînement, guidée en rotation par rapport au carter d'actionneur de manière à tourner sans translation autour d'un axe de référence du carter d'actionneur dans un sens de rotation d'écartement et dans un sens de rotation opposé, l'axe de référence du carter d'actionneur étant perpendiculaire à un plan médian du mécanisme d'actionneur, et définissant deux sens de poussée opposés, chacun associé à un côté du plan médian. Le mécanisme d'actionneur comporte, de chaque côté du plan médian un poussoir guidé en translation bidirectionnelle le long de l'axe de référence par rapport au carter d'actionneur ; et une platine intermédiaire. De chaque côté du plan médian, la platine intermédiaire est liée au poussoir par une interface filetée et à la roue d'entraînement par une interface à rampes à billes, l'interface filetée ayant un sens d'hélice assurant un mouvement du poussoir par rapport au carter d'actionneur dans le sens de poussée associé lorsque la platine intermédiaire tourne par rapport au poussoir dans le sens de rotation d'écartement, l'interface à rampes à billes ayant un sens de rampes à billes assurant un mouvement de la platine intermédiaire par rapport au carter d'actionneur dans le sens de poussée associé lorsque la roue d'entraînement tourne par rapport à la platine intermédiaire dans le sens de rotation d'écartement.

Ainsi sont constituées deux chaînes cinématiques de transmission parallèle, chacune partant de la roue d'entraînement et transitant par l'une des deux interfaces à rampes à billes, puis par l'une des deux platines intermédiaires, puis par l'une des interfaces filetées, pour entraîner chacune l'un des deux poussoirs. Chacune des deux interfaces à rampes à billes peut ainsi être éloignée du poussoir associé, et protégée par l'interposition de la platine intermédiaire associée.

Par interface filetée, on entend ici une liaison de type vis-écrou, entre deux composants du mécanisme d'actionneur, ici entre chaque platine intermédiaire et le poussoir associé, mobiles l'un par rapport à l'autre en rotation autour de l'axe de référence et en translation le long de l'axe de référence, cette liaison étant de préférence irréversible, au sens ou une rotation relative entre les deux composants entraîne une translation relative, mais qu'un effort axial entre les deux composants ne génère pas une rotation relative. Une telle interface n'a pas un rendement excellent, du fait des frottements dans la liaison vis-écrou. Mais elle permet de réaliser une course importante et précise.

Par interface à rampes à billes, on entend ici une interface entre deux composants du mécanisme d'actionneur, ici entre la roue d'entraînement et l'une des platines intermédiaires, mobiles l'un par rapport à l'autre en rotation autour de l'axe de référence et en translation le long de l'axe de référence, cette interface comportant une ou plusieurs billes qui roulent sur une ou plusieurs rampes dont la profondeur, mesurée le long de l'axe de référence, varie, de sorte qu'en parcourant la ou les rampes, la ou les billes écartent ou rapprochent l'un de l'autre les deux composants mobiles, le long de l'axe de référence. Ce type d'interface à rampes à billes permet d'exercer un effort axial important avec un excellent rendement, mais avec une course réduite. Les interfaces à rampes à billes peuvent être de type réversible ou non réversible, suivant qu'un effort axial peut ou non engendrer une rotation de l'interface.

De chaque côté du plan médian, l'interface à rampes à billes peut comporter :
- N rampes équiréparties autour de l'axe de référence, solidaires d'un premier élément tournant parmi la roue d'entraînement et la platine intermédiaire, N étant un nombre entier supérieur ou égal à trois ;
- N rampes ou N gorges de profondeur constante équiréparties autour de l'axe de référence, solidaires d'un deuxième élément tournant parmi la roue d'entraînement et la platine intermédiaire, et
- N billes roulant sur les N rampes du premier élément tournant et les N rampes ou gorges du deuxième élément tournant.

Les rampes peuvent s'étendre sur un secteur angulaire inférieur, égal ou supérieur à un tour. Suivant un exemple de réalisation, on prévoit que N=3, les rampes s'étendant sur un secteur angulaire qui est compris entre un quart et un tiers de tour.

De préférence, on prévoit que de chaque côté du plan médian, l'interface à rampes à billes présentera une valeur maximale de couple de frottement statique supérieure à une valeur maximale de couple de frottement statique de l'interface filetée en l'absence d'effort exercé par le poussoir sur la platine intermédiaire dans le sens opposé au sens de poussée associé et inférieure à une valeur maximale de couple de frottement statique de l'interface filetée en présence d'un effort nominal exercé par le poussoir sur la platine intermédiaire dans le sens opposé au sens de poussée associé. La valeur maximale de couple de frottement statique désigne ici la valeur maximale du couple appliqué à l'interface avant de provoquer un mouvement de rotation relative à l'interface. Les différences entre les valeurs maximales de couple de frottement statique permettent d'assurer un séquencement avantageux des mouvements des deux interfaces.

Ainsi, en l'absence d'efforts appliqués depuis l'extérieur du mécanisme d'actionneur sur les poussoirs dans le sens opposé au sens de poussée associé, la rotation de la roue d'entraînement est transmise aux platines intermédiaires et provoquent un vissage ou un dévissage des interfaces filetées, suivant le sens de rotation de la roue d'entraînement. En pratique, une telle situation est rencontrée d'une part lorsque la roue d'entraînement tourne dans le sens de rotation d'écartement, et que les poussoirs n'ont pas encore rencontré de résistance, donc dans une phase de rattrapage de jeu, et d'autre part lorsque la roue d'entraînement tourne dans le sens opposé au sens de rotation d'écartement et que les poussoirs ne sont pas poussés dans le sens opposé au sens de poussée par un élément mobile extérieur au mécanisme d'actionneur, donc dans une phase de retrait complet du mécanisme d'actionneur, par exemple lors d'une opération de maintenance.

En présence d'efforts appliqués depuis l'extérieur du mécanisme d'actionneur sur les poussoirs dans le sens opposé au sens de poussée associé, les interfaces filetées s'opposent à la libre rotation des platines intermédiaires, de sorte que la rotation de la roue d'entraînement provoque au niveau des interfaces à rampes à billes un écartement ou un rapprochement entre les platines intermédiaires et la roue d'entraînement, suivant le sens de rotation de la roue d'entraînement. En pratique, cette situation est rencontrée dans toutes les phase de fonctionnement autres que les phases de rattrapage de jeu, c'est-à-dire dans toutes les phases où les poussoirs poussent un organe mobile associé dans le sens de poussée, ou sont poussés par l'organe mobile associé dans le sens opposé au sens de poussée.

En pratique, chacun des deux poussoirs est mobile par rapport au carter entre au moins une position en retrait et une position en saillie, chacun des deux poussoirs dans la position en retrait étant au moins partiellement logé à l'intérieur du carter, chacun des deux poussoirs dans la position en saillie étant au moins partiellement en saillie à l'extérieur du carter dans le sens de poussée associé. De préférence, on prévoit que de chaque côté du plan médian, l'interface à rampes à billes sera située dans un volume délimité au moins partiellement par le carter d'actionneur et le poussoir. Alternativement ou au surplus, on prévoit de préférence que de chaque côté du plan médian, la platine intermédiaire sera située dans un volume de logement, encadré axialement par le poussoir et par la roue d'entraînement, et radialement par le carter d'actionneur et/ou le poussoir. Le carter participe à la protection des interfaces à rampes à billes contre les polluants. Le cas échéant, un joint torique peut être positionné entre le carter et chaque poussoir, pour améliorer encore cette protection contre les polluants.

Suivant un mode de réalisation, de chaque côté du plan médian, la platine intermédiaire est rappelée dans un sens opposé au sens de poussée associé par un élément de rappel élastique. De préférence, de chaque côté du plan médian, l'élément de rappel élastique exerce des efforts axiaux opposés sur la platine intermédiaire et sur la roue d'entraînement, et comprime axialement l'interface à rampes à billes. L'élément de rappel élastique agit également indirectement sur le poussoir associé par l'intermédiaire de l'interface filetée associée.

Suivant un mode de réalisation, de chaque côté du plan médian, le poussoir est lié au carter d'actionneur par un dispositif anti-rotation, interdisant au poussoir de tourner autour de l'axe de référence. Ainsi, chaque poussoir est mobile en translation sans rotation le long de l'axe de référence lorsque la platine intermédiaire associée est elle-même entraînée en translation par l'interface à rampes à billes, et lorsque la platine intermédiaire associée est entraînée en rotation et provoque un vissage ou un dévissage au niveau de l'interface filetée.

Suivant un mode de réalisation, le carter d'actionneur comporte une ouverture d'accès à une interface d'entraînement de la roue d'entraînement, l'interface d'entraînement étant destinée à coopérer avec un organe d'entraînement d'un dispositif moteur. Il peut s'agir par exemple d'une roue dentée destinée à engrener avec un pignon de sortie d'un motoréducteur ou avec une crémaillère mobile en translation, ou d'une poulie reliée à un arbre moteur par une courroie. De préférence, le carter d'actionneur est équipé d'un joint d'étanchéité positionné autour de l'ouverture et destiné à coopérer avec un carter du dispositif moteur, pour prévenir l'intrusion de polluants externes par l'ouverture.

Suivant un autre aspect de l'invention, celle-ci a trait à un dispositif d'actionneur, notamment pour un dispositif de frein, qui comporte un mécanisme d'actionneur tel que décrit précédemment et un dispositif moteur comportant un organe d'entraînement en prise avec l'interface d'entraînement du dispositif moteur, et un carter moteur entourant l'ouverture du carter d'actionneur le dispositif d'actionneur comportant de préférence un joint d'étanchéité statique entourant l'ouverture, entre le carter d'actionneur et le carter moteur.

Suivant un autre aspect de l'invention, celle-ci a trait à un dispositif de frein pour un équipage tournant autour d'un axe de rotation, notamment un arbre ou une roue de véhicule, comportant : un élément de friction destiné à être fixé à l'équipage tournant, deux organes mobiles opposés pourvus chacun d'une garniture de frein et d'un épaulement d'appui, et aptes chacun à se déplacer entre au moins deux positions, à savoir une position hors contact avec l'élément de friction et une position de contact entre la garniture de frein et l'élément de friction, et un dispositif de rappel élastique des deux organes mobiles vers une première des deux positions. Ce dispositif de frein comporte en outre un mécanisme d'actionneur tel que décrit précédemment, dont chaque poussoir est disposé en face de l'épaulement d'appui de l'un des deux organes mobiles, et apte à pousser l'épaulement d'appui vers une deuxième des deux positions.

Suivant un mode de réalisation, l'élément de friction est un tambour et les deux organes mobiles sont des mâchoires destinées à être montées pivotantes autour d'un axe de pivotement parallèle à l'axe de rotation.

Suivant un autre mode de réalisation, l'élément de friction est un disque et les deux organes mobiles forment deux branches d'un étrier, destinées à être montées mobiles en translation dans un plan perpendiculaire à l'axe de rotation.

Le dispositif de frein peut notamment être normalement ouvert. Dans cette hypothèse, la première position est la position hors contact avec l'élément de friction.

Alternativement, le dispositif de frein peut notamment être normalement fermé. Dans cette hypothèse, la première position est la position de contact entre la garniture de frein et l'élément de friction.

Suivant un mode de réalisation, le dispositif de frein comporte en outre un dispositif anti-rotation, interdisant à chaque poussoir de tourner autour de l'axe de référence]. Ce dispositif anti-rotation peut être intégré au mécanisme d'actionneur, ou à l'interface entre le mécanisme d'actionneur et les deux organes mobiles du dispositif de frein. Il peut notamment s'agir d'un verrouillage en rotation par complémentarité de forme entre l'épaulement des deux organes mobiles et les poussoirs du mécanisme d'actionneur.

### BRÈVE DESCRIPTION DES FIGURES

D'autres caractéristiques et avantages de l'invention ressortiront à la lecture de la description qui suit, en référence aux figures annexées.
[Fig. 1] La figure 1 illustre un dispositif de frein à tambour de type normalement ouvert, pourvu d'un mécanisme d'actionneur selon l'invention.
[Fig. 2] La figure 2 illustre un dispositif de frein à disque de type normalement ouvert, pourvu d'un mécanisme d'actionneur selon l'invention.
[Fig. 3] La figure 3 illustre un dispositif de frein à tambour de type normalement fermé, pourvu d'un mécanisme d'actionneur selon l'invention.
[Fig. 4] La figure 4 illustre un dispositif de frein à disque de type normalement fermé, pourvu d'un mécanisme d'actionneur selon l'invention.
[Fig. 5] La figure 5 illustre en coupe axiale un mécanisme d'actionneur selon un premier mode de réalisation de l'invention, applicable à l'un quelconque des dispositifs de frein des revendications 1 à 4, dans une position rétractée.
[Fig. 6] La figure 6 illustre le mécanisme d'actionneur de la figure 5, dans une position d'écartement intermédiaire, à l'issue d'une phase d'écartement rapide depuis la position de la figure 5.
[Fig. 7] La figure 7 illustre le mécanisme d'actionneur de la figure 5, dans une position d'écartement plus importante, à l'issue d'une phase d'écartement lent à partir de la position de la figure 6, ou à l'issue d'une phase d'écartement rapide à partir de la position de la figure 8.
[Fig. 8] La figure 8 illustre le mécanisme d'actionneur de la figure 5, dans une position de rétractation intermédiaire, à l'issue d'une phase de rétractation rapide à partir de la position de la figure 7, ou à l'issue d'une phase d'écartement lente depuis la position de la figure 5.
[Fig. 9] La figure 9 illustre le mécanisme d'actionneur de la figure 5, en vue éclatée.
[Fig. 10] La figure 10 illustre en vue éclatée un mécanisme d'actionneur selon un deuxième mode de réalisation de l'invention, applicable à l'un quelconque des dispositifs de frein des revendications 1 à 4.
[Fig. 11] La figure 11 illustre le mécanisme d'actionneur de la figure 10, en coupe axiale suivant un plan de coupe XI-XI illustré sur la figure 12, dans une position de rétractation intermédiaire, à l'issue d'une phase de rétractation rapide, ainsi qu'une partie d'un dispositif de frein dans lequel le mécanisme d'actionneur est inséré.
[Fig. 12] La figure 12 illustre le mécanisme d'actionneur de la figure 10, en coupe axiale dans un plan de coupe XII-XII illustré sur la figure 11.
[Fig. 13] La figure 13 illustre en vue isométrique un dispositif de frein à disque pourvu d'un mécanisme d'actionneur identique au mécanisme d'actionneur des figures 10 à 12.
[Fig. 14] La figure 14 illustre le dispositif de frein à disque de la figure 13 en coupe.

Pour plus de clarté, les éléments identiques ou similaires sont repérés par des signes de référence identiques sur l'ensemble des figures.

### DESCRIPTION DÉTAILLÉE DE MODES DE RÉALISATION

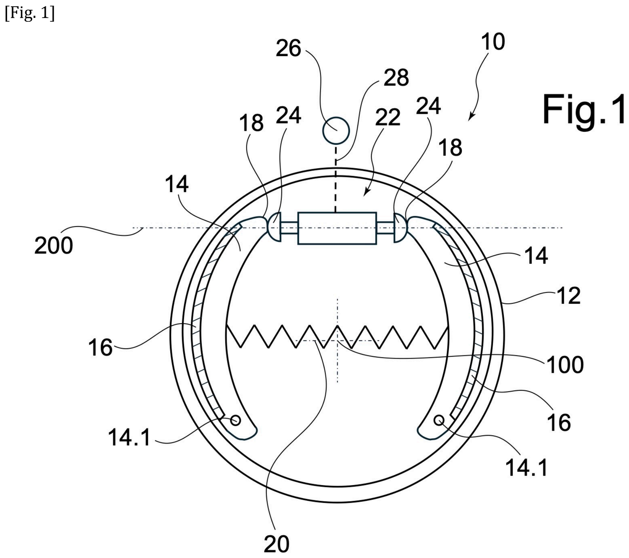

Sur les figures 1 à 4 sont illustrés quatre modes de réalisation d'un dispositif de frein **10** pour un équipage tournant autour d'un axe de rotation **100,** notamment un arbre ou une roue de véhicule. Ces quatre modes de réalisation ont en commun de comporter : un élément de friction **12** destiné à être fixé à l'équipage tournant, deux organes mobiles **14** opposés pourvus chacun d'une garniture de frein 16 et d'un épaulement d'appui **18,** et aptes chacun à se déplacer entre au moins deux positions, à savoir une position hors contact avec l'élément de friction **12** et une position de contact entre la garniture de frein **16** et l'élément de friction **12,** un dispositif de rappel élastique **20** des deux organes mobiles **14** vers une première des deux positions, un mécanisme d'actionneur **22** à deux poussoirs **24** opposés disposés chacun en face de l'épaulement d'appui **18** de l'un des deux organes mobiles **14,** et aptes à pousser l'épaulement d'appui **18** associé vers une deuxième des deux positions, et un dispositif moteur **26** pour entraîner le mécanisme d'actionneur **22,** lié à ce dernier par une interface d'entraînement **28.**

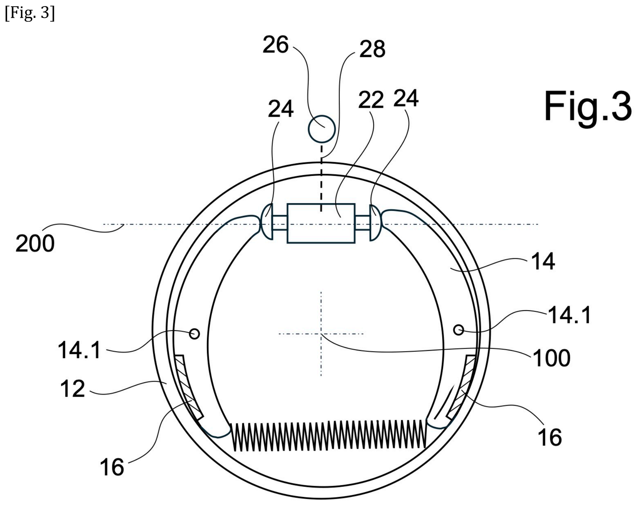

Sur les figures 1 et 3, l'élément de friction **12** est un tambour et les deux organes mobiles **14** sont des mâchoires destinées à être montées pivotantes autour d'un axe de pivotement **14.1** parallèle à l'axe de rotation **100.**

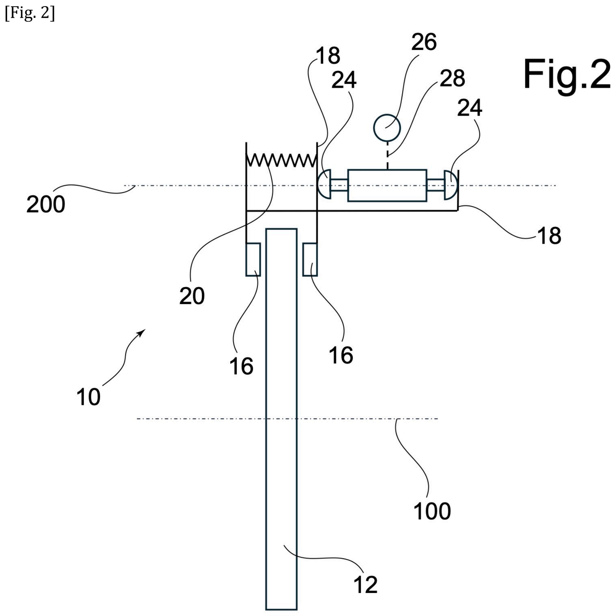

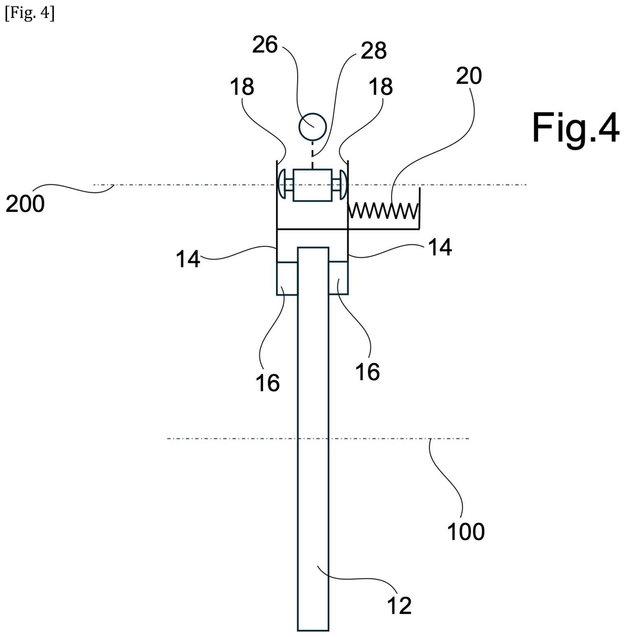

Sur les figures 2 et 4, l'élément de friction **12** est un disque et les deux organes mobiles **14** forment deux branches d'un étrier, destinées à être montées mobiles en translation dans un plan perpendiculaire à l'axe de rotation **100.**

Sur les figures 1 et 2, la première position, illustrée sur les figures, est la position hors contact avec l'élément de friction **12,** le dispositif de rappel élastique **20** étant constitué par un ressort travaillant en traction dans le mode de réalisation de la figure 1, et un ressort travaillant en compression dans le mode de réalisation de la figure 2. On parle alors de mécanisme de frein **10** normalement ouvert.

Sur les figures 3 et 4, la première position, illustrée sur les figures, est la position de contact entre les garnitures de frein et l'élément de friction, le dispositif de rappel élastique **20** étant constitué par un ressort travaillant en compression dans le mode de réalisation de la figure 3, et un ressort travaillant en compression dans le mode de réalisation de la figure 4. On parle alors de mécanisme de frein normalement fermé.

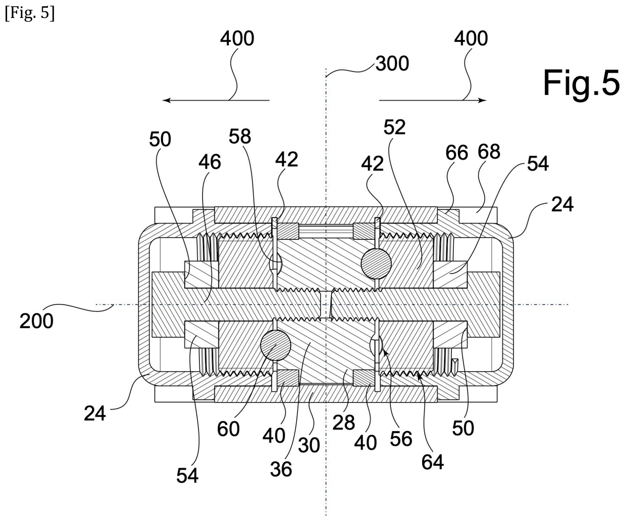

Un premier mode de réalisation du mécanisme d'actionneur **22,** adapté aux dispositifs de frein **10** selon les quatre modes de réalisation des figures 1 à 4, va maintenant être décrit plus précisément sur les figures 5 à 9. Ce mécanisme d'actionneur comporte un carter d'actionneur **30,** réalisé par exemple d'une pièce en métal, qui définit un axe de référence **200** du mécanisme d'actionneur **22** et délimite une cavité **32** de forme générale cylindrique ouverte à deux extrémités axiales opposées **34.** Suivant les configurations du dispositif de frein **10,** l'axe de référence **200** peut être orthogonal à l'axe de rotation **100** de l'équipage mobile et de l'élément de friction **12** (figures 1 et 3) ou parallèle à cet axe de rotation **100** (figures 2 et 4).

On peut également définir un plan médian **300** du mécanisme d'actionneur **22,** perpendiculaire à l'axe de référence **200** et situé de préférence axialement à mi-chemin des deux extrémités axiales **34** du carter **30.** Pour les besoins de la description, on associe à chaque demi-espace situé d'un côté du plan médian **300** un sens de poussée **400** parallèle à l'axe de référence **200,** dirigée du plan médian **300** vers le demi-espace associé.

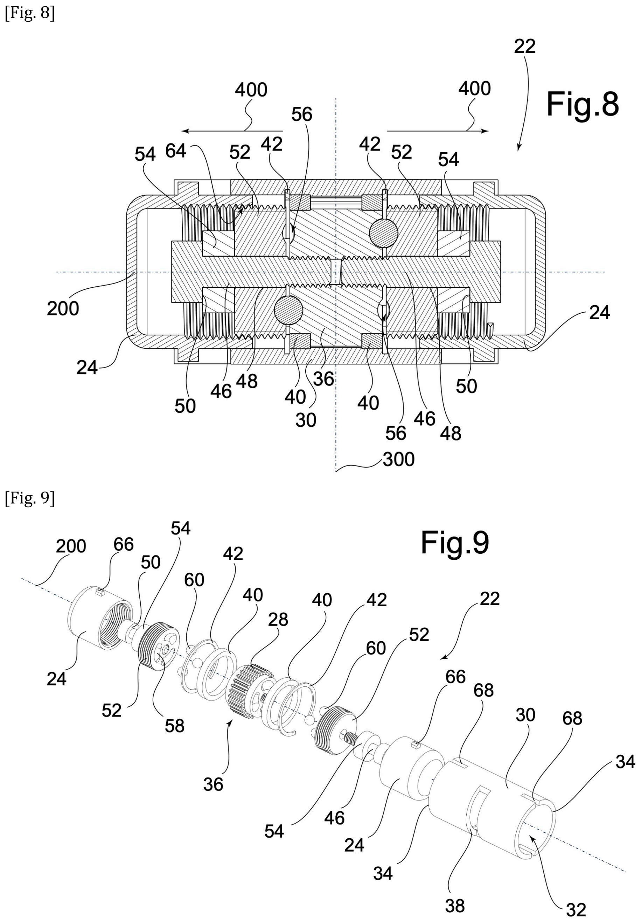

Une roue d'entraînement **36** est logée partiellement à l'intérieur du carter d'actionneur **30,** et forme l'interface d'entraînement **28,** ici sous la forme d'une denture, visible sur la figure 9, en saillie hors du carter d'actionneur **30** par une fenêtre latérale **38** du carter d'actionneur **30,** de façon à pouvoir coopérer avec un organe d'entraînement, par exemple une roue dentée, une courroie ou une chaîne de liaison avec un moteur rotatif formant le dispositif moteur **26,** ou avec une crémaillère d'un moteur linéaire formant le dispositif moteur **26.**

La roue d'entraînement **36** est guidée en rotation par rapport au carter d'actionneur **30** de manière à tourner sans translation autour de l'axe de référence **200** du carter d'actionneur **30** dans un sens de rotation d'écartement et dans un sens de rotation opposé. Pour ce faire, on peut par exemple prévoir un ou plusieurs paliers lisses ou à roulement **40** (notamment roulements à billes, rouleaux ou aiguilles), disposés entre le carter d'actionneur **30** et la roue d'entraînement **36,** de préférence de part et d'autre de la roue d'entraînement **36,** et deux rondelles élastiques **42** de maintien axial de la roue d'entraînement **36.** La roue d'entraînement **36** est de préférence positionnée de façon à être centrée sur le plan médian **300.**

La roue d'entraînement **36** comporte deux trous taraudés **44** opposés centrés sur l'axe de référence **200.** Chaque trou taraudé **44** permet de fixer par vissage une tige **46** partiellement filetée en saillie dans l'un des deux demi-espaces, dans le sens de poussée associé **400.** Chaque tige **46** présente une portée cylindrique de guidage **48** et un épaulement d'appui **50** tourné à l'opposé du sens de poussée associé **400.** À chaque tige **46** sont associés une platine intermédiaire **52** coulissant sur la portée cylindrique de guidage **48** et un élément de rappel élastique **54** en compression entre la platine intermédiaire **52** et l'épaulement d'appui **50** de la tige **46.**

Chaque platine intermédiaire **52** est liée à la roue d'entraînement **36** par une interface **56** à rampes à billes, constituée de rampes **58** dont la profondeur, mesurée en direction axiale, varie avec la coordonnée angulaire mesurée autour de l'axe de référence **200,** et de billes **60** roulant sur les rampes **58,** qui sont conformées de façon à retenir et guider les billes **60.** Les rampes **58** ont un sens de rampes à billes assurant un mouvement de la platine intermédiaire **52** associée dans le sens de poussée associé **400** par rapport au carter d'actionneur **30** lorsque la roue d'entraînement **36** tourne dans le sens de poussée par rapport à la platine intermédiaire associée **52.**

Chaque platine intermédiaire **52** est liée à un poussoir **24** associé par une interface filetée **64** ayant un sens d'hélice assurant un mouvement du poussoir associé dans le sens de poussée **400** associé par rapport au carter d'actionneur **30** lorsque la platine intermédiaire **52** associée tourne dans le sens de rotation d'écartement autour de l'axe de référence **200** par rapport au poussoir **24** associé. L'interface filetée **64** génère un couple résistant à la rotation, qui est très faible en l'absence d'effort axial entre la platine intermédiaire **52** et le poussoir **24** mais qui augmente de façon importante dès qu'un effort axial est exercé. Cette variation peut être obtenue par exemple en prévoyant un jeu constructif entre les filets intérieur et extérieur de l'interface filetée **64,** ce jeu constructif pouvant être très faible. Il s'ensuit que l'interface filetée **64** présente une valeur maximale de couple de frottement statique inférieure à une valeur maximale de couple de frottement statique de l'interface à rampes à billes **56** en l'absence d'effort exercé par le poussoir **24** sur la platine intermédiaire **52** dans le sens opposé au sens de poussée associé **400** et supérieure à la valeur maximale de couple de frottement statique de l'interface à rampes à billes **56** en présence d'un effort exercé par le poussoir **24** sur la platine intermédiaire **(52)** dans le sens opposé au sens de poussée associé **400.**

Dans le mode de réalisation des figures 5 à 9, le poussoir **24** présente un coulisseau de guidage **66,** qui pénètre dans une glissière **68** axiale de guidage formée dans le carter d'actionneur **30,** de sorte que le poussoir **24** présente par rapport au carter d'actionneur **30** un unique degré de liberté, à savoir un degré de liberté de translation parallèlement à l'axe de référence **200.** Chaque platine intermédiaire **52** est positionnée axialement entre le poussoir **24** associé (ou au moins une partie du poussoir associé) et la roue d'entraînement **36** (ou le plan médian **300).**

Dans une position rétractée illustrée sur la figure 5, la roue d'entraînement **36** se trouve dans une première position angulaire, telle que les billes **60** sont positionnées dans les portions les plus profondes des rampes **58.** Les platines intermédiaires **52** sont poussées vers la roue d'entraînement **36** par les éléments élastiques **54** associés, de sorte que la position axiale des platines intermédiaires **52** est au plus proche du plan médian **300,** dans une position de fin de course. Les interfaces filetées **64** entre les poussoirs **24** et les platines intermédiaires **52** sont quant à elles également dans une position de fin de course de vissage. Les organes mobiles **14** du dispositif de frein **10** se trouvent alors rappelés dans la première position par le dispositif de rappel élastique **20.**

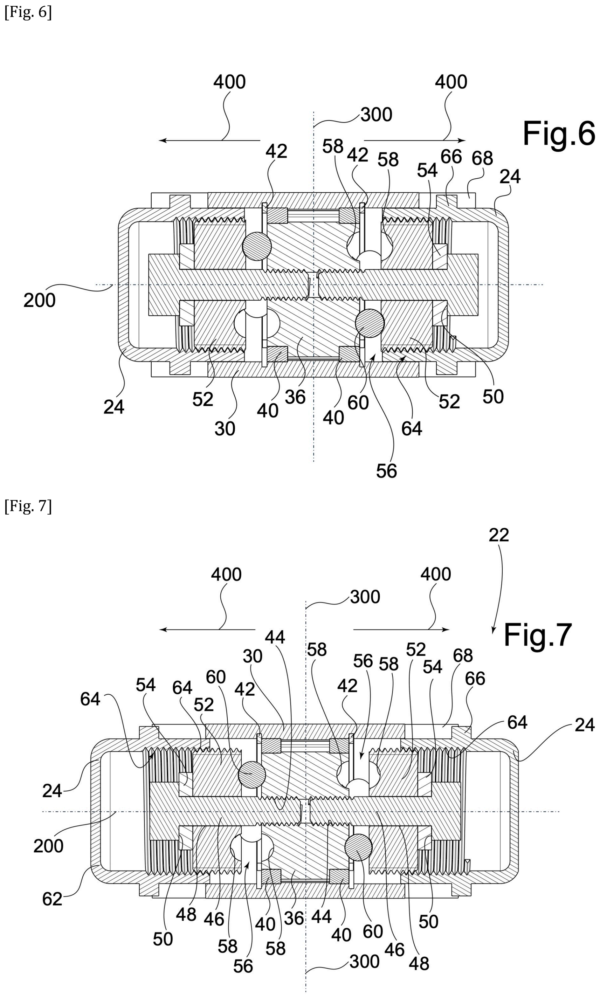

On supposera dans un premier temps que dans la position de la figure 5, les poussoirs **24** sont chacun au contact d'un organe mobile **14** d'un dispositif de frein **10,** qui exerce sur le poussoir **24** associé une force dans le sens opposé au sens de poussée **400** associé, du fait de l'action du dispositif de rappel élastique **20** du dispositif de frein **10.** Lorsque, dans cette hypothèse et à partir de la position de la figure 5, la roue d'entraînement **36** est entraînée en rotation autour de l'axe de référence **200** par le dispositif moteur **26** dans le sens de rotation d'écartement, les frottements au niveau des interfaces filetées **64** empêchent ces dernières de tourner, et les billes **60** de l'interface à rampes à billes **56** roulent sur les rampes **58,** de sorte que les platines intermédiaires **52** s'écartent progressivement de la roue d'entraînement **36** et s'éloignent progressivement du plan médian **300** en comprimant les éléments élastiques **54** associés, comme illustré sur la figure 6. Les poussoirs **24** suivent le mouvement de translation des platines intermédiaires **52** et s'éloignent progressivement du plan médian **300.** Dans cette phase d'écartement rapide, le pas des rampes à billes **56,** c'est-à-dire la distance axiale parcourue par la platine intermédiaire **52** pour un tour de la roue d'entraînement (ou ramenée à un tour de la roue d'entraînement) est déterminante pour le rapport de transmission entre rotation de la roue d'entraînement **36** et translation des poussoirs **24.** Ce pas est déterminé par la pente des rampes **58.** Dans cette phase d'écartement rapide, les poussoirs **24** entraînent les organes mobiles **14** du dispositif de frein **10** vers la deuxième positionsans que cette position soit nécessairement atteinte. Si cette position est atteinte au cours de la phase d'écartement rapide, les poussoirs **24** ne peuvent plus progresser et la roue d'entraînement **36** se trouve bloquée.

Lorsque, à partir de la position de la figure 6, la roue d'entraînement **36** est entraînée dans le sens de rotation opposé au sens de rotation d'écartement, et que les organes mobiles **14,** sollicités par le dispositif de rappel élastique **20,** exercent sur les poussoirs **24** un effort dont la résultante axiale est dans le sens opposé au sens de poussée **400** associé, les frottements au niveau des interfaces filetées **64** empêchent ces dernières de tourner et les billes **60** de l'interface à rampes à billes **56** roulent sur les rampes **58,** de sorte que les platines intermédiaires **52** se rapprochent progressivement de la roue d'entraînement **36** et du plan médian **300,** en détendant les éléments élastiques **54** associés. Les poussoirs **24** suivent le mouvement de translation des platines intermédiaires **52** et se rapprochent progressivement du plan médian **300.** Cette phase de rétractation rapide jusqu'à la position de la figure 5 se déroule sans mouvement relatif de rotation entre les platines intermédiaires **52** et les poussoirs **24** associés, du fait du frottement statique relativement plus élevé au niveau des interfaces filetées **64** qu'au niveau des interfaces à rampes à billes **56.** Le rapport de transmission entre rotation de la roue d'entraînement **36** et translation des poussoirs **24** est fonction du pas des rampes à billes. Le dispositif de rappel élastique **20** du dispositif de frein rappelle les deux organes mobiles **14** vers la première position. Lorsque les billes atteignent l'extrémité la plus profonde des rampes, la commande du moteur d'entraînement **26** s'arrête.

Si, dans la position de la figure 6 où les billes **60** atteignent l'extrémité la moins profonde des rampes **58,** la deuxième position du dispositif de frein **10** n'est pas atteinte par les organes mobiles **14,** la rotation de la roue d'entraînement **36** dans le sens de rotation d'écartement se poursuit, et les interfaces à rampes à billes **56** solidarisent en rotation les platines intermédiaires **52** à la roue d'entraînement **36** dans le sens de rotation d'écartement, de sorte que les platines intermédiaires **52** se mettent à tourner dans le sens de rotation d'écartement par rapport au carter **30.** Dans la mesure où les poussoirs **24** ne peuvent tourner autour de l'axe de référence **200,** la rotation des platines intermédiaires **52** provoque un dévissage progressif des interfaces filetées **64,** qui éloigne davantage les poussoirs **24** du plan médian **300,** jusqu'à ce que les organes mobiles **14** du dispositif de frein **10** aient atteint la deuxième position. Dans cette phase d'écartement lente, le mécanisme d'actionneur progresse de la position de la figure 6 à la position de la figure 7. Le pas d'hélice des interfaces filetées **64** détermine le rapport de transmission entre rotation de la roue d'entraînement **36** et translation des poussoirs **24.** Ce pas est substantiellement plus faible que celui des interfaces à rampes à billes **56,** par exemple inférieur à la moitié, et de préférence inférieur à 1/5^{ème} du pas des interfaces à rampes à billes **56.** La phase d'écartement lent se poursuit jusqu'à ce que les organes mobiles **14** atteignent la deuxième position et bloquent la progression des poussoirs **24.** On a illustré sur la figure 7 la position du mécanisme d'actionneur **22** à l'issue de cette phase d'écartement lente, dans une hypothèse où la deuxième position du dispositif de frein **10,** du fait de l'usure, correspond à une position de fin de course du mécanisme d'actionneur **22.** En pratique, la deuxième position du dispositif de frein **10** pourra correspondre à une position intermédiaire entre les figures 6 et 7.

Lorsque, à partir de la position de la figure 7, la roue d'entraînement **36** est entraînée dans le sens de rotation opposé au sens de rotation d'écartement, et que les organes mobiles **14,** sollicités par le dispositif de rappel élastique **20,** exercent sur les poussoirs **24** un effort dont la résultante axiale est dans le sens opposé au sens de poussée **400** associé, les frottements au niveau des interfaces filetées **64** empêchent ces dernières de tourner, et les billes **60** de l'interface à rampes à billes **56** roulent sur les rampes **58,** de sorte que les platines intermédiaires **52** se rapprochent progressivement de la roue d'entraînement **36** et du plan médian **300,** en détendant les éléments élastiques **54** associés. Les poussoirs **24** suivent le mouvement de translation des platines intermédiaires **52** et se rapprochent progressivement du plan médian **300.** Cette phase de rétractation rapide jusqu'à la position de la figure 8 se déroule sans mouvement relatif de rotation entre les platines intermédiaires **52** et les poussoirs **24** associés. Lorsque les billes atteignent l'extrémité la plus profonde des rampes, la commande du moteur d'entraînement **26** s'arrête, définissant une nouvelle première position pour les organes mobiles **14** du dispositif de frein **10.**

Lorsque, à l'itération suivante, à partir de la position de la figure 8, en présence d'efforts exercés par les organes mobiles **14** du dispositif de frein 10 sur chacun des poussoirs **24** dans le sens opposé au sens de poussée **400** associé, le dispositif moteur **26** entraîne la roue d'entraînement **36** en rotation autour de l'axe de référence **200** dans le sens de rotation d'écartement, les frottements au niveau des interfaces filetées **64** empêchent ces dernières de tourner alors que les billes **60** de l'interface à rampes à billes **56** roulent sur les rampes **58,** de sorte que les platines intermédiaires **52** s'écartent progressivement de la roue d'entraînement **36** et s'éloignent progressivement du plan médian **300** en comprimant les éléments élastiques **54** associés, jusqu'à atteindre la position illustrée sur la figure 7. Le fonctionnement est alors similaire à ce qui a été décrit précédemment pour le passage de la position de la figure 5 à la position de la figure 6.

Ainsi, on constate que le mécanisme d'actionneur a la capacité, en passant de la position de la figure 6 à la position de la figure **7****,** de rattraper un jeu dans le dispositif de frein **10** grâce aux interfaces filetées **64,** puis de mémoriser ce rattrapage de jeu au niveau des interfaces filetées **64,** de sorte que les mouvements ultérieurs se limitent aux passages entre les positions des figures 8 et 7 par des phases d'écartement et de rétractation rapides. Naturellement, la position mémorisée par les interfaces filetées **64** dépendra du jeu rattrapé, qui est illustré de façon extrême sur les figures 7 et 8, mais pourrait être moindre.

Lorsque l'usure des garnitures de frein **16** modifie la deuxième position, l'itération suivante ne permet plus d'atteindre la deuxième position à la fin de la phase d'écartement rapide, et la rotation de la roue d'entraînement **36** se poursuit autant que nécessaire dans la phase d'écartement lente, d'une façon similaire à ce qui a été décrit pour le passage de la position de la figure 6 à la position de la figure 7.

Ainsi, par itérations successives, le mécanisme d'actionneur s'adapte de lui-même à l'usure des garnitures de frein **16,** en préservant une bonne réactivité. À cet effet, on peut prévoir que le dispositif moteur **26** soit piloté à la fois en position et en couple : le pilotage en couple est utilisé dans la phase d'écartement rapide et la phase d'écartement lente, pour arrêter le moteur lorsque le couple moteur dépasse une valeur seuil déterminée (qui, dans les dispositifs de frein normalement ouvert des figures 1 et 3 détermine la pression entre garnitures de frein **16** et éléments de friction **12).** Le pilotage en position est utilisé dans la phase de rétractation rapide pour arrêter la rétractation lorsque la roue d'entraînement **36** a tourné dans le sens opposé au sens de rotation d'écartement d'un angle égal au débattement angulaire de l'interface à rampes à billes **56.**

Dans la description qui précède, on a supposé que dans toutes les configurations du mécanisme d'actionneur **22,** le dispositif de rappel élastique **20** génère sur chacun des poussoirs **24,** par l'intermédiaire des organes mobiles **14,** un effort dans le sens opposé au sens de poussée **400** associé. Il n'est toutefois pas exclu que la course des organes mobiles **14** soit telle qu'il n'y ait pas de contact avec les poussoirs **24** dans la position de la figure 5. Dans cette hypothèse, l'interface filetée **64** présente une valeur maximale de couple de frottement statique inférieure à une valeur maximale de couple de frottement statique de l'interface à rampes à billes **56.** Par conséquent, lorsque la roue d'entraînement **36** est entraînée dans le sens de rotation d'écartement à partir de la position de la figure 5, les interfaces à rampes à billes **56** solidarisent en rotation les platines intermédiaires **52** à la roue d'entraînement **36** dans le sens de rotation d'écartement, et les platines intermédiaires **52** se mettent à tourner dans le sens de rotation d'écartement par rapport au carter **30.** Dans la mesure où les poussoirs **24** ne peuvent tourner autour de l'axe de référence **200,** la rotation des platines intermédiaires **52** provoque un dévissage progressif des interfaces filetées **64,** qui éloigne davantage les poussoirs **24** du plan médian **300,** amenant le mécanisme d'actionneur **22** de la position de la figure 5 vers la position de la figure 8, jusqu'à ce que soit atteinte une position de prise de contact entre les poussoirs **24** et les organes mobiles **14,** qui correspond à une nouvelle position de référence de l'interface filetée. Une fois cette position atteinte, la poursuite de la rotation de la roue d'entraînement provoque la rotation de l'interface à rampes à billes **56,** sans rotation de l'interface filetée, de façon similaire à ce qui était précédemment décrit pour le passage de la position de la figure 5 à celle de la figure 6. Dans la suite des phases de poussée et de rétractation, la nouvelle position de référence de l'interface filetée reste mémorisée.

Dans la description des phases de rétractation des poussoirs (de la position de la figure 6 à celle de la figure 5, ou de la position de la figure **7** à celle de la figure 8), on a supposé que le dispositif moteur **26** cesse d'entraîner la roue d'entraînement **36** dans le sens de rotation opposé au sens de rotation d'écartement dès que l'interface à rampes à billes a atteint sa position de fin de course de rétractation. C'est ce qui permet de minimiser la course subséquente dans le sens de rotation d'écartement et de conserver la mémorisation de la position par l'interface filetée.

Il peut toutefois arriver que l'on souhaite retourner à la position de rétractation extrême de la figure 5, alors que l'interface filetée a mémorisé une position intermédiaire, voire la position extrême des figures 7 et 8. Ce pourra être le cas notamment pour une opération de maintenance du dispositif de frein **10.** Il suffit alors, à partir d'une des positions des figures 7 ou 8, d'entraîner la roue d'entraînement **36** dans le sens de rotation opposé au sens de rotation d'écartement jusqu'à ce que l'interface filetée **64** retourne à la position de la figure 5.

De façon préférée, le guidage des poussoirs **24** dans le carter d'actionneur **30** est ajusté, de sorte à limiter les intrusions de polluants à l'intérieur du volume délimité par le carter d'actionneur **30.** Alternativement, le carter peut être pourvu de joints toriques en contact glissant avec des sièges de joint cylindriques formé sur les deux poussoirs **24.** De façon similaire, un joint d'étanchéité peut être prévu autour de la fenêtre **38,** destiné à venir au contact d'un carter du dispositif moteur. Chaque platine intermédiaire **52** est ainsi située, dans toutes les positions opérationnelles du mécanisme d'actionneur **22,** dans un volume de logement fermé et protégé associé, délimité axialement par le poussoir **24** associé et par le palier associé **40.** Ceci limite le risque d'une pollution de l'interface à rampes à billes **56,** et permet de prolonger la durée de vie potentielle du mécanisme d'actionneur.

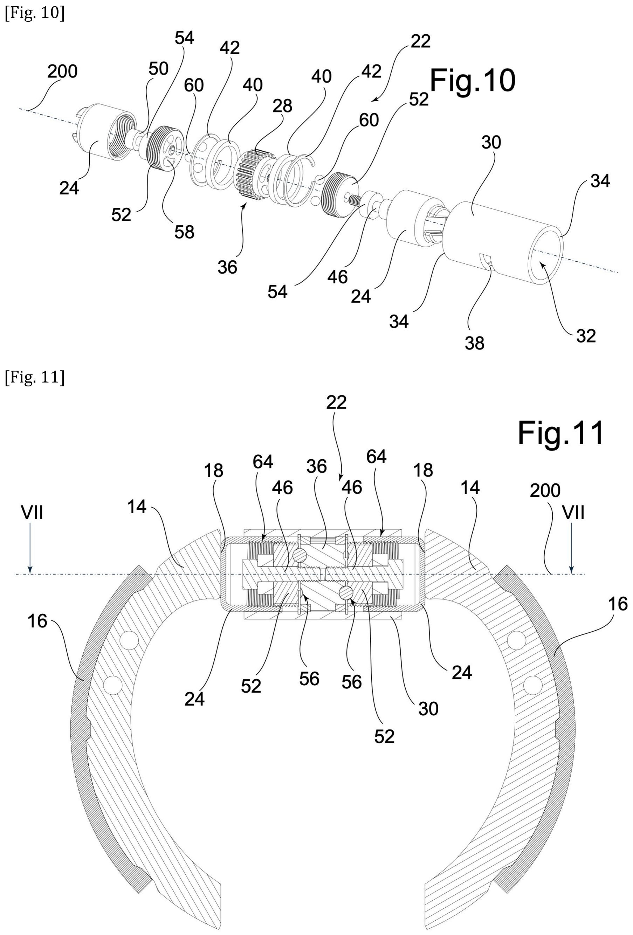

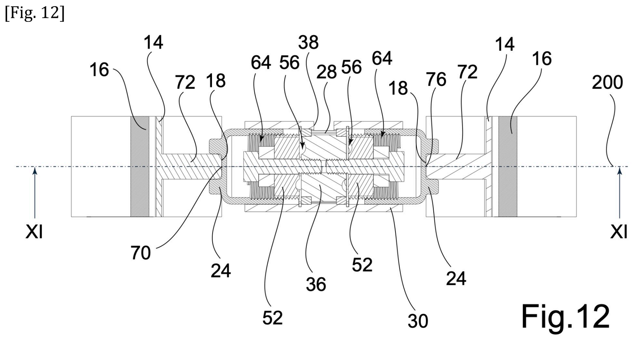

Un deuxième mode de réalisation du mécanisme d'actionneur adapté aux dispositifs de frein selon les quatre modes de réalisation des figures 1 à 4, est illustré sur les figures 10 à 12. Ce mode de réalisation ne diffère du précédent que par les moyens mis en œuvre pour bloquer les poussoirs **24** en rotation par rapport au carter **30** du mécanisme d'actionneur. Ce blocage est réalisé non pas par une interface de guidage **66, 68** entre le carter **30** et les poussoirs **24,** mais au niveau d'un blocage de forme par encastrement d'une extrémité **70** des poussoirs **24** avec une forme complémentaire **72 des** organes mobiles **14** du dispositif de frein **10.**

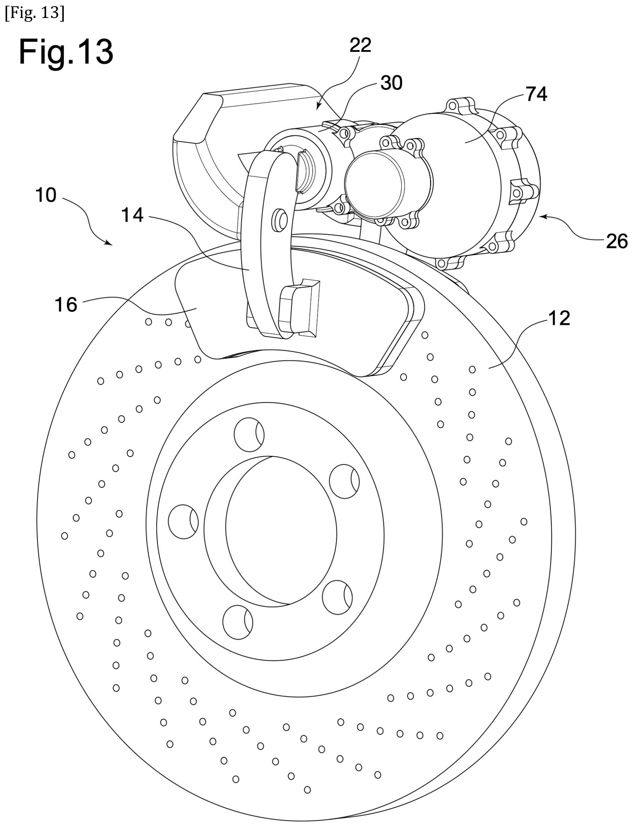

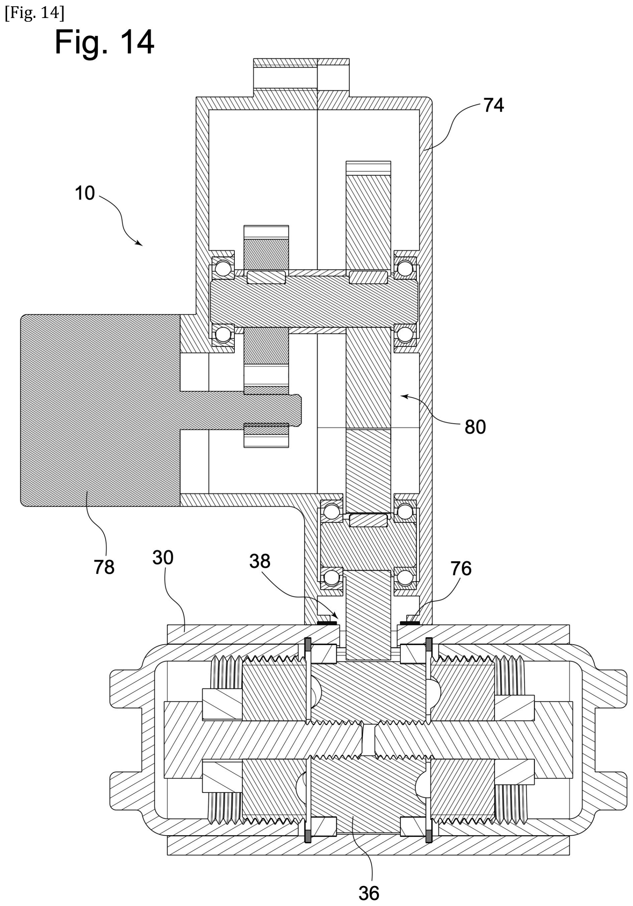

Un troisième mode de réalisation est illustré sur les figures 13 et 14, qui est une variante de réalisation du dispositif de frein **10** normalement ouvert de la figure 2, présentant un disque de friction **12** et des organes mobiles **14** pivotant. On a illustré dans ce mode de réalisation le dispositif moteur **26,** qui présente un carter moteur **74** fixé au carter d'actionneur **30.** Un joint d'étanchéité statique **76** entoure l'ouverture **38** du carter d'actionneur **30** et vient étanchéifier l'interface entre le carter d'actionneur **30** et le carter moteur **74.** Le dispositif moteur **26** peut comporter un moteur électrique **78** peut être en prise directe avec la roue d'entraînement **36,** ou qui peut l'entraîner par l'intermédiaire d'un train réducteur **80.**

Naturellement, les exemples représentés sur les figures et discutés ci- dessus ne sont donnés qu'à titre illustratif et non limitatif.

Le mouvement des deux organes mobiles **14** des figures 1 et 3 peut être un pivotement autour d'un axe de rotation et le mouvement des deux organes mobiles **14** des figures 2 et 4 peut être une translation. Le dispositif de rappel élastique **20** des deux organes mobiles **14** peut comporter un ou plusieurs dispositifs ressorts, pouvant notamment être choisi parmi des ressorts hélicoïdaux, des ressorts à lames, des rondelles Belleville, des plots élastomères, ou d'autres éléments élastiquement déformables.

## Revendications

1. Mécanisme d'actionneur (22) comportant :
- un carter d'actionneur (30) ; et
- une roue d'entraînement (36), guidée en rotation par rapport au carter d'actionneur (30) de manière à tourner sans translation autour d'un axe de référence (200) du carter d'actionneur (30) dans un sens de rotation d'écartement et dans un sens de rotation opposé, l'axe de référence (200) du carter d'actionneur (30) étant perpendiculaire à un plan médian (300) du mécanisme d'actionneur (22), et définissant deux sens de poussée (400) opposés, chacun associé à un côté du plan médian (300) ;
le mécanisme d'actionneur comportant, de chaque côté du plan médian (300)
- un poussoir (24) guidé en translation bidirectionnelle le long de l'axe de référence (200) par rapport au carter d'actionneur (30) ; et
- une platine intermédiaire (52),
**caractérisé en ce que** de chaque côté du plan médian (300), la platine intermédiaire (52) est liée au poussoir (24) par une interface filetée (64) et à la roue d'entraînement (36) par une interface à rampes à billes (56), l'interface filetée (64) ayant un sens d'hélice assurant un mouvement du poussoir (24) par rapport au carter d'actionneur (30) dans le sens de poussée (400) associé lorsque la platine intermédiaire (52) tourne par rapport au poussoir (24) dans le sens de rotation d'écartement, l'interface à rampes à billes (56) ayant un sens de rampes à billes assurant un mouvement de la platine intermédiaire (52) par rapport au carter d'actionneur (30) dans le sens de poussée (400) associé lorsque la roue d'entraînement (36) tourne par rapport à la platine intermédiaire (52) dans le sens de rotation d'écartement.

2. Mécanisme d'actionneur (22) selon la revendication 1, **caractérisé en ce que** de chaque côté du plan médian (300), l'interface à rampes à billes (56) présente une valeur maximale de couple de frottement statique supérieure à une valeur maximale de couple de frottement statique de l'interface filetée (64) en l'absence d'effort exercé par le poussoir (24) sur la platine intermédiaire (52) dans le sens opposé au sens de poussée associé (400) et inférieure à une valeur maximale de couple de frottement statique de l'interface filetée (64) en présence d'un effort nominal exercé par le poussoir (24) sur la platine intermédiaire (52) dans le sens opposé au sens de poussée associé (400).

3. Mécanisme d'actionneur (22) selon l'une quelconque des revendications précédentes, **caractérisé en ce que**
- de chaque côté du plan médian (300), l'interface à rampes à billes (56) est située dans un volume délimité au moins partiellement par le carter d'actionneur (30) et le poussoir (24) et/ou
- de chaque côté du plan médian (300), la platine intermédiaire (52) est située dans un volume de logement, encadré axialement par le poussoir (24) et par la roue d'entraînement (36), et radialement par le carter d'actionneur (30) et/ou le poussoir (24).

4. Mécanisme d'actionneur (22) selon l'une quelconque des revendications précédentes, caractérisé en ce de chaque côté du plan médian (300), l'interface à rampes à billes (56) comporte :
- N rampes (58) équiréparties autour de l'axe de référence, solidaires d'un premier élément tournant parmi la roue d'entraînement (36) et la platine intermédiaire (52), N étant un nombre entier supérieur ou égal à trois ;
- N rampes ou N gorges de profondeur constante (58) équiréparties autour de l'axe de référence, solidaires d'un deuxième élément tournant parmi la roue d'entraînement (36) et la platine intermédiaire (52), et
- N billes (60) roulant sur les N rampes (58) du premier élément tournant et les N rampes ou gorges (58) du deuxième élément tournant.

5. Mécanisme d'actionneur (22) selon l'une quelconque des revendications précédentes, **caractérisé en ce que** de chaque côté du plan médian (300), la platine intermédiaire (52) est rappelée dans un sens opposé au sens de poussée (400) associé par un élément de rappel élastique (54).

6. Mécanisme d'actionneur (22) selon la revendication 5, **caractérisé en ce que** de chaque côté du plan médian (300), l'élément de rappel élastique (54) exerce des efforts axiaux opposés sur la platine intermédiaire (52) et sur la roue d'entraînement (36), et comprime axialement l'interface à rampes à billes (56).

7. Mécanisme d'actionneur (22) selon l'une quelconque des revendications précédentes, **caractérisé en ce que** de chaque côté du plan médian (300), le poussoir (24) est lié au carter d'actionneur (30) par un dispositif anti-rotation, interdisant au poussoir (24) de tourner autour de l'axe de référence (200).

8. Mécanisme d'actionneur (22) selon l'une quelconque des revendications précédentes, **caractérisé en ce que** le carter d'actionneur (30) comporte une ouverture (38) d'accès à une interface d'entraînement (28) de la roue d'entraînement (36), l'interface d'entraînement (28) étant destinée à coopérer avec un organe d'entraînement d'un dispositif moteur (26).

9. Dispositif d'actionneur, notamment pour un dispositif de frein (10), **caractérisé en ce qu'**il comporte un mécanisme d'actionneur (22) selon la revendication 8 et un dispositif moteur (26) comportant un organe d'entraînement (28) en prise avec l'interface d'entraînement du dispositif moteur (26), et un carter moteur (74) entourant l'ouverture (38) du carter d'actionneur (30) le dispositif d'actionneur comportant de préférence un joint d'étanchéité statique (76) entourant l'ouverture, entre le carter d'actionneur (30) et le carter moteur (74).

10. Dispositif de frein (10) pour un équipage tournant autour d'un axe de rotation (100), notamment un arbre ou une roue de véhicule, comportant :
- un élément de friction (12) destiné à être fixé à l'équipage tournant,
- deux organes mobiles (14) opposés pourvus chacun d'une garniture de frein (16) et d'un épaulement d'appui (18), et aptes chacun à se déplacer entre au moins deux positions, à savoir une position hors contact avec l'élément de friction (12) et une position de contact entre la garniture de frein (16) et l'élément de friction (12), et
- un dispositif de rappel élastique (20) des deux organes mobiles (14) vers une première des deux positions,
**caractérisé en ce qu'**il comporte un mécanisme d'actionneur (22) selon l'une quelconque des revendications 1 à 9, dont chaque poussoir (24) est disposé en face de l'épaulement d'appui (18) de l'un des deux organes mobiles (14), et apte à pousser l'épaulement d'appui (14) vers une deuxième des deux positions.

11. Dispositif de frein selon la revendication 10, **caractérisé en ce que** l'élément de friction (12) est un tambour et les deux organes mobiles (14) sont des mâchoires destinées à être montées pivotantes autour d'un axe de pivotement parallèle à l'axe de rotation.

12. Dispositif de frein selon la revendication 10, **caractérisé en ce que** l'élément de friction (12) est un disque et les deux organes mobiles (14) forment deux branches d'un étrier, destinées à être montées mobiles en translation dans un plan perpendiculaire à l'axe de rotation (100).

13. Dispositif de frein selon l'une quelconque des revendications 10 à 12, **caractérisé en ce que** la première position est la position hors contact avec l'élément de friction (12).

14. Dispositif de frein selon l'une quelconque des revendications 10 à 12, **caractérisé en ce que** la première position est la position de contact entre la garniture de frein (18) et l'élément de friction (12).

15. Dispositif de frein selon l'une quelconque des revendications 10 à 14, **caractérisé en ce qu'**il comporte un dispositif anti-rotation, interdisant à chaque poussoir de tourner autour de l'axe de référence (200).
